# EUROPEAN PATENT APPLICATION

(11) **EP 3 952 345 A1**
(43) Date of publication of application: **09.02.2022**
(21) Application number: 20778513.0
(22) Date of filing: 21.01.2020
(51) Int. Cl.: H04W 4/02, H04W 4/029, H04W 64/00

(54) **METHOD AND DEVICE FOR SELECTING LOCAL LOCATION MANAGEMENT FUNCTION (L-LMF) ENTITY**

(30) Priority: 27.03.2019 CN 201910239864
(71) Applicant: Datang Mobile Communications Equipment Co., Ltd., Beijing 100085 (CN)
(72) Inventor: NI, Chunlin, Beijing 100085 (CN); FU, Jing, Beijing 100085 (CN); QUAN, Haiyang, Beijing 100085 (CN); ZHANG, Dajun, Beijing 100085 (CN)
(74) Representative: Nony
(86) International application number: PCT/CN2020/073640
(87) International publication number: WO 2020/192270

(57) **Abstract**

Disclosed in the present application are a method and a device for selecting a local location management function (L-LMF) entity, which are used for ensuring that, under a 5G localization network architecture, UE can use the L-LMF entity of a non-serving RAN node after moving, so as to satisfy the localization requirements of the 5G localization network architecture for high precision and low time delay. The method includes: upon reception of a localization request message sent by an access and mobility management function (AMF) entity/mobility management entity (MME), starting to execute a process of directing of the UE to the L-LMF entity of a non-serving node; and providing a localization service for the UE by mutually transmitting with the UE a transmission message carrying relevant localization information.

## Description

### Cross-Reference to Related Applications

The present application claims the priority of the Chinese patent application No. 201910239864.1 filed to the China National Intellectual Property Administration on March 27, 2019, and entitled "Method and Device for Selecting Local location Management Function (L-LMF) Entity", of which the entire contents are incorporated herein by reference.

### Field

The present application relates to a mobile communication technology, in particular to a method and device for selecting a local location management function (L-LMF) entity.

### Background

Location based services/Localization service (LBS/LCS) are a service for obtaining user equipment (UE) location information through a radio communication network or other localization systems and then providing all kinds of information related to a location for a user in combination with a geographical information system. Up to time now, an outdoor localization technology based on a global navigation satellite system (GNSS) has been widely applied to various fields. In addition, a high-precision localization technology based on a mobile communication network of a 4rd-generation (4G) digital communication technology also fills in the gaps of the navigation satellite system effectively.

At present, the mobile communication network has entered into a 5rd-generation (5G) digital communication technology age. Based on a 5G localization network architecture which is more concise and more efficient, compared with a 4G long term evolution (LTE) localization network architecture, the 5G localization network architecture has localization requirements for higher precision and lower time delay, and a location management function (LMF) is located on a radio access network (RAN) local or a core network (CN) side.

However, in the prior art, an LMF entity is located in the CN, and when a UE in a connected-state moves in a RAN node across mode under the same access and mobility management function (AMF) entity, the LMF serving for the UE may not change.

Based on the local location management function (L-LMF) entity located on an RAN node in the above 5G network architecture, there has been no L-LMF entity for switching the LMF located on the CN side to being located on the RAN node after the UE in the connected-state moves in the prior art.

### Summary

The present application provides a method and device for selecting a local location management function (L-LMF) entity, which are used for ensuring that, under a 5G localization network architecture and based on introducing of an L-LMF of an RAN node, UE may use the L-LMF entity of a non-serving RAN node after moving, so as to satisfy the requirements for obtaining a low-time-delay localization service under the 5G localization network architecture and distinguishing the service types.

In a first aspect, the present application provides a method for selecting an L-LMF entity, which is applied to the L-LMF entity of a non-serving node of a UE. The method includes:
in response to that a localization request message sent by an access and mobility management function (AMF) entity/mobility management entity (MME) is received, starting to execute a process of directing from the UE to the L-LMF entity of the non-serving node; and
providing a localization service for the UE by mutually communicating a communication message with the UE, wherein the communication message carries relevant localization information.

The method provided by the present application is used for the L-LMF entity with the UE in the connected-state using the non-serving node of the UE. Localization service information is transmitted based on an NG or Xn interface, it is ensured that under a network architecture for introducing the L-LMF entity based on the 5G localization network architecture, a flexible localization service can be provided, and the concise and efficient localization service can be better performed, so as to satisfy the localization requirements of the 5G localization network architecture for low time delay and flexibility.

In a second aspect, the present application provides a method for selecting an L-LMF entity, which is applied to an AMF entity/MME entity. The method includes:
selecting an L-LMF entity of a non-serving node for a UE according to localization requirement information of the UE; and
sending a localization request message to the L-LMF entity of the non-serving node, and starting to execute a process of directing from the UE to the L-LMF entity of the non-serving node.

In a third aspect, the present application provides a device for selecting an L-LMF entity. The device is a device where the L-LMF entity of a non-serving node of a UE is located and includes:
a processor; and
a memory storing program codes wherein the program codes, when executed by the processor, cause the processor to be configured to:
   in response to that a localization request message sent by an AMF entity/MME is received, start to execute a process of directing from the UE to the L-LMF entity of the non-serving node; and
   provide a localization service for the UE by mutually communicating a communication message with the UE, wherein the communication message carries relevant localization information.

In a fourth aspect, the present application provides another device for selecting an L-LMF entity. The device is a device where an AMF entity/MME is located and includes a processor and a memory storing program codes wherein the program codes, when executed by the processor, cause the processor to be configured to:
select an L-LMF entity of a non-serving node for a UE according to localization requirement information of the UE; and
send a localization request message to the L-LMF entity of the non-serving node, and starting to execute a process of directing from the UE to the L-LMF entity of the non-serving node.

In a fifth aspect, the present application provides a first device for selecting an L-LMF entity. The first device is a device where the L-LMF entity of a non-serving node of a UE is located and includes:
an execution starting unit, configured to start to execute a process of directing from the UE to the L-LMF entity of the non-serving node in response to that a localization request message sent by an AMF entity/MME is received; and
a localization communication unit, configured to provide a localization service for the UE by mutually communicating a communication message carrying relevant localization information with the UE.

In a sixth aspect, the present application provides a second device for selecting an L-LMF entity. The second device is a device where an AMF entity/MME is located and includes:
a selecting unit, configured to select an L-LMF entity of a non-serving node for a UE according to localization requirement information of the UE; and
a directing starting unit, configured to send a localization request message to the L-LMF entity of the non-serving node, and start to execute a process of directing from the UE to the L-LMF entity of the non-serving node.

In a seventh aspect, the present application provides a computer storage medium on which a computer program is stored. The program, when executed by a processing unit, realizes steps of the method in the first aspect.

In an eighth aspect, the present application provides a computer storage medium on which a computer program is stored. The program, when executed by a processing unit, realizes steps of the method in the second aspect.

In addition, technical effects brought by any implementation mode in the second aspect to the sixth aspect may refer to technical effects brought by different implementation modes in the first aspect, which is not repeated here.

### Brief Description of the Drawings

In order to illustrate the technical solutions in the embodiments of the present application more clear, the drawings needing to be used in description of the embodiments will be briefly introduced below. Obviously, the drawings described below are only some embodiments of the present application, and other drawings can further be obtained according to these drawings for those ordinary skills in the art without inventive efforts.
FIG. 1 is a schematic diagram of a 5G mobile communication system provided by an embodiment of the present application.
FIG. 2A is a schematic diagram of a 5G radio protocol architecture provided by an embodiment of the present application.
] FIG. 2B is a schematic diagram of a 5G radio protocol architecture provided by an embodiment of the present application.
FIG. 3 is a diagram of a 5G localization network architecture provided by an embodiment of the present application.
FIG. 4 is a schematic diagram of a system for selecting an L-LMF entity based on an Xn interface provided by an embodiment of the present application.
FIG. 5 is a schematic diagram of a system for selecting an L-LMF entity based on an NG interface provided by an embodiment of the present application.
FIG. 6 is a flow chart of a method for selecting an L-LMF entity provided by an embodiment of the present application.
FIG. 7 is a flow chart of another method for selecting an L-LMF entity provided by an embodiment of the present application.
FIG. 8 is a schematic diagram of a device for selecting an L-LMF entity provided by an embodiment of the present application.
FIG. 9 is a schematic diagram of another device for selecting an L-LMF entity provided by an embodiment of the present application.
FIG. 10 is a schematic diagram of a first device for selecting an L-LMF entity provided by an embodiment of the present application.
FIG. 11 is a schematic diagram of a second device for selecting an L-LMF entity provided by an embodiment of the present application.

### Detailed Description of the Embodiments

In order to make the objective, technical solutions and advantages of the present application more clear, the present application will be further described in detail with reference to the drawings. Obviously, the described embodiments are only part of the embodiments of the present application, but not all the embodiments. On the basis of the embodiments in the present application, all other embodiments obtained by those of ordinary skilled in the art without inventive efforts fall within the protection scope of the present application.

An application scene described by the embodiments of the present application is intended to illustrate the technical solutions of the embodiments of the present application more clearly, and does not form limitation to the technical solutions provided by the embodiments of the present application. Those of ordinary skilled in the art can know that the technical solutions provided by the embodiments of the present application are also suitable for similar technical problems along appearing of a new application scene.

A 5G mobile communication system is introduced as followings.

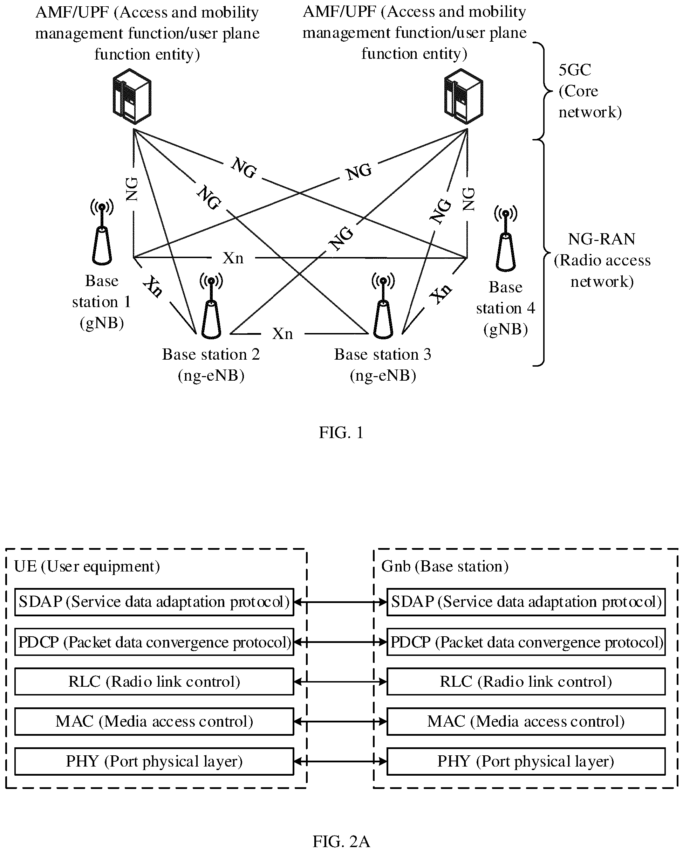

Referring to FIG. 1, in the 5G system, nodes on a network side are mostly in wired connection, that is to say, radio access network NG-RAN nodes are connected through a wired link. As shown in FIG. 1, base stations are connected with each other through a wired link, an interface for transmitting data is an Xn interface, the NG-RAN nodes and core network 5GC nodes are also connected through a wired link. For example, an AMF or a user plane function (UPF) entity and the base stations are connected through a wired link, wherein the base stations include the 4G base station of the NG interface (ng evolved NodeB, ng-eNB) and the 5G base station (gNB).

A 5G radio protocol architecture is introduced as followings.

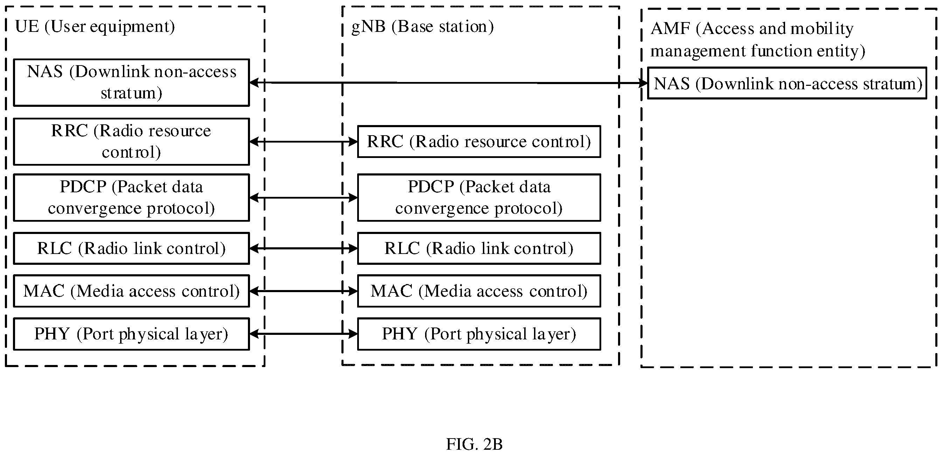

A 5G basic user plane protocol stratum includes: a service data adaptation protocol (SDAP), a packet data convergence protocol (PDCP), radio link control (RLC) and a media access control (MAC) address, and a port physical layer (PHY). A control plane protocol stratum includes: a non-access stratum (NAS), radio resource control (RRC), PDCP, RLC, MAC and PHY. Protocol stack architectures of a user plane and a control plane are as shown in FIG. 2A and FIG. 2B respectively.

A 5G localization network architecture is introduced as followings.

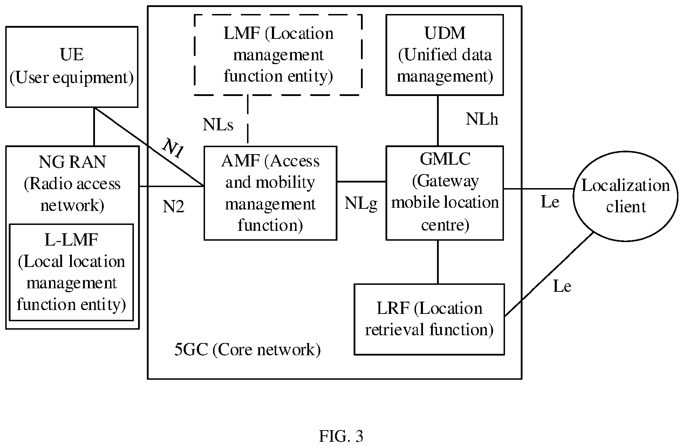

FIG. 3 shows a 5G localization service network architecture based on service, wherein a location management function (LMF) entity is located at the radio access network NG-RAN nodes, for example, the LMF entity shares the same station location with the 5G base station, or located in the core network 5GC. The LMF entity includes a local location management function (L-LMF) entity and a core network location management function (CN-LMF) entity, and is provided with the following functions: supporting localization computing, obtaining a downlink localization measuring result or localization estimation from UE, obtaining an uplink localization measuring result from the RAN side, obtaining auxiliary data from the RAN side, and so on.

In the prior art, the LMF entity is located in the CN, when the UE in a connected-state moves in a RAN node across mode under the same AMF, the LMF serving for the UE does not change, and therefore, the embodiments provided by the present disclosure can select the L-LMF of a non-serving node for the UE based on introduction of the L-LMF of the RAN node. Furthermore, when the UE in the connected-state moves across the RAN node, a new serving node will inform a source serving node and the L-LMF of the non-serving node selected before moving, and therefore, when the UE in the connected-state crosses the RAN node, the L-LMF of the non-serving node used before moving can still be selected so as to satisfy the service requirements of obtaining a low-time-delay localization service under the 5G localization network architecture and distinguishing service types, thereby creating larger commercial values for the society.

### Embodiment 1

An embodiment provides a system for selecting an L-LMF entity. The system includes a non-serving node of a UE, an AMF entity/MME, and a serving node of the UE.

The non-serving node is configured to start to execute a process of directing from the UE to the L-LMF entity of the non-serving node in response to that a localization request message sent by the AMF entity/MME is received, and provide a localization service for the UE by mutually communicating a communication message carrying relevant localization information with the UE.

The AMF entity/MME is configured to select the L-LMF entity of the non-serving node for the UE according to localization requirement information of the UE, send the localization request message to the L-LMF entity of the non-serving node, and start to execute the process of directing from the UE to the L-LMF entity of the non-serving node.

When the UE entering into a connected state has the localization requirement, the appropriate L-LMF entity of the non-serving node will be selected for the UE through the AMF entity/MME according to a certain principle such as a localization quality of service (QoS) requirements, a location of the UE, the capability of the L-LMF/CN-LMF, and a localization type (for example, whether there is a real-time requirement or a time delay requirement), so as to provide the localization service for the UE.

Optionally, the L-LMF entity of the non-serving node can provide the localization service for the UE by mutually communicating the communication message carrying the relevant localization information with the UE based on an Xn interface or an NG interface. Furthermore, when the UE in the connected-state moves across the RAN nodes, a new serving node will inform the L-LMF of the non-serving node selected before moving and a source serving node, and the L-LMF of the original non-serving node can still be reused to provide the localization service for the UE. Various possible specific implementations are given below.

### Specific implementation mode 1

The L-LMF entity of the non-serving node mutually communicates the communication message carrying the relevant localization information with the UE based on the Xn interface.

The flow for selecting the appropriate L-LMF entity of the non-serving node for the UE through the AMF entity/MME is as followings.

1) The AMF entity/MME selects the L-LMF entity of the non-serving node for the UE according to the localization requirement information of the UE.

Specifically, the localization requirement information of the UE includes any one or more of the followings: information of a serving node of the UE, a localization QoS requirement, and relevant information of the L-LMF entity.

2) The AMF entity/MME sends the localization request message to the L-LMF entity of the non-serving node, and starts to execute the process of directing from the UE to the L-LMF entity of the non-serving node, and starts to execute the process of directing from the UE to the L-LMF entity of the non-serving node.

The above localization request message carries information of a serving cell of the UE, namely carries information of the serving node of the UE.

3) The L-LMF entity of the non-serving node mutually communicates the communication message carrying the relevant localization information with the UE directly through the serving node of the UE.

The above communication message carrying the relevant localization information includes a communication message carrying an LTE positioning protocol (LPP).

In the above step 3), the communication message carrying the relevant localization information may be communicated by adopting the following modes.

The L-LMF entity of the non-serving node sends the communication message carrying the LPP to the serving node of the UE according to the situation that the above localization request message carries the information of the serving cell of the UE, and the serving node sends a downlink radio resource control (RRC) message carrying the LPP information to the UE.

The UE sends an uplink RRC message carrying the LPP information to the serving node, and the serving node sends the communication message carrying the LPP to the L-LMF entity of the non-serving node.

The executing sequence of the above two steps can be interchanged without sequence limitation.

4) The L-LMF entity of the non-serving node starts to execute a process of redirecting from the UE to the L-LMF entity of the non-serving node when it is determined that the UE in the connected-state completes node-across moving; and the L-LMF entity of the non-serving node provides a localization service for the UE by mutually communicating the communication message carrying the relevant localization information with the UE based on the Xn interface.

Specifically, in the process of the node-across moving of the UE in the connected-state, a source node of the UE or the AMF entity/MME can determine the new serving node of the UE. In the switching process of across nodes, the source serving node of the UE and the AMF entity/MME can obtain information of the new serving node of the UE, while the non-serving node of the UE determines the information of the new serving node of the UE in the process of the node-across moving by receiving an informing message carrying the information of the new serving node and sent by the AMF entity/MME, so as to complete redirecting to the L-LMF entity.

In this process, the AMF entity/MME will not select a L-LMF entity of a new non-serving node for the UE again. When the non-serving node receives a request message sent by the new serving node of the UE, or a switching message carrying the information of the new serving node and sent by the source serving node of the UE, or the informing message carrying the information of the new serving node and sent by the AMF entity/MME, the non-serving node re-determines the new serving node of the UE, and mutually communicate the communication message carrying the relevant localization information with the UE based on the Xn interface directly through the new serving node of the UE.

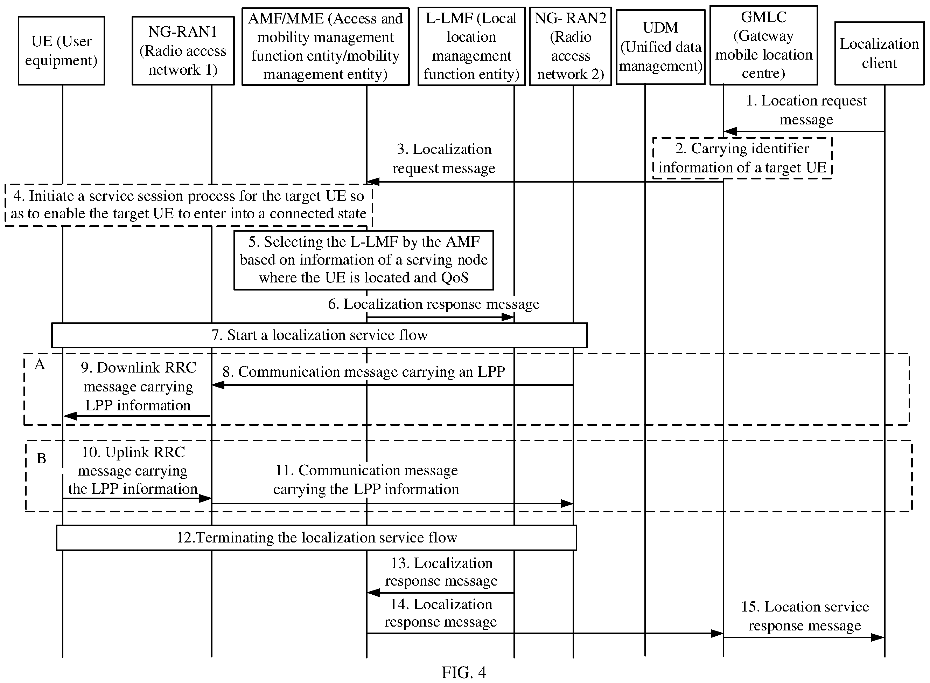

As shown in FIG. 4, the above system further includes a localization client, a gateway mobile location centre (GMLC), unified data management (UDM), and the UE. The specific implementation flow is as follows.
Step 1: the localization client initiates a location request message, and the location request message contains an identifier of a target UE, the localization QoS requirement and the like.
Step 2: optionally, the GMLC sends a message to the UDM, and the message carries identifier information of the target UE. The GMLC receives a message from the UDM, and address information of the AMF entity/MME is returned in this message.
Step 3: the GMLC sends a localization request message to the AMF entity/MME according to the address information of the AMF entity/MME, and the localization request message contains the identifier of the target UE, the localization QoS requirement and the like.
Step 4: the AMF entity/MME initiates a service session process for the target UE, and thus the target UE enters into a connected state. This step is an optional step, and does not need to be executed if the UE has entered into the connected state.
Step 5: the AMF entity/MME selects to use the L-LMF entity of the non-serving node NG-RAN2 of the UE according to the information of the source node NG-RAN where the UE is located, the localization QoS requirement and pre-preserved relevant information of the L-LMF or the relevant localization information (such as localization capability information) obtained by querying through a network repository function (NRF).
Step 6: the AMF entity/MME sends the localization request message to the L-LMF of the serving node of the UE through an NLs/SLs interface, and the request message contains information such as a localization session identifier, the identifier of the target UE, and the localization QoS requirement. The above localization request message further carries information of the service cell of the UE, namely, information of the serving node of the UE.
Step 7: the L-LMF starts to execute the process of directing from the UE to the L-LMF entity of the non-serving node NG-RAN2. The process of directing from the UE to the L-LMF entity of the non-serving node NG-RAN2, includes: information of the selected L-LMF entity of the non-serving node NG-RAN2 is informed to the UE, and the UE sends the localization request message to the selected L-LMF entity of the non-serving node NG-RAN2 to request to be provided with the localization service.
Step 8: the non-serving node NG-RAN2 transmits the communication message carrying the LPP information to the serving node NG-RAN1 of the UE according to the information of the serving node of the UE carried in the localization request message. The above LPP information is configured to inform the serving node that the L-LMF entity of the non-serving node may be used to realize the localization service.
Step 9: the NG-RAN1 sends the downlink RRC message carrying the LPP information to the UE. The above LPP information is configured to inform the UE that the L-LMF entity of the non-serving node may be used to realize the localization service.
Step 10: the UE sends the uplink RRC message carrying the LPP information to the NG-RAN1. The above LPP information is configured to enable the UE to send the information about the localization requirement to the serving node.
Step 11: the NG-RAN1 sends the communication message carrying the LPP information to the L-LMF entity of the non-serving node NG-RAN2. The above LPP information is configured to send the information about the localization requirement of the UE to the non-serving node.
   In FIG. 4, a block A represents transfer of the downlink LPP message, a block B represents transfer of the uplink LPP message, and the sequence of the block A and the block B can be interchanged.
Step 12: a localization service flow is terminated, and a flow from steps 13 to 15 is executed.
Step 13: the non-serving node NG-RAN2 sends a localization response to the AMF entity/MME, and informs the AMF entity/MME of terminating the localization service flow.
Step 14: the AMF entity/MME returns a localization response message to the GMLC and informs the GMLC of terminating the localization service flow.
Step 15: the GMLC sends a location service response message to the localization client and informs the localization client of terminating the localization service flow.

When it is determined that the UE in the connected-state completes the node-across moving, in the process of switching from the source serving node NG-RAN1 to a new serving node NG-RAN3, the process of redirecting from the UE to the L-LMF entity of the non-serving node NG-RAN2, includes: the AMF entity/MME informs the L-LMF entity of the non-serving node NG-RAN2 about information of the new serving node NG-RAN3 where the UE is located; the UE sends the localization request message to the L-LMF entity of the new non-serving node NG-RAN3 to request to provide the localization service; and then the flow of mutually communicating the communication message carrying the relevant localization information with the UE through the new serving node of the UE based on the Xn interface refers to the description from the step 8 to step 15, the difference lies in that the serving node is updated from NG-RAN1 to NG-RAN3 (not shown in the figures), and the specific process is not repeated here.

### Specific implementation mode 2

The L-LMF entity of the non-serving node mutually communicates the communication message carrying the relevant localization information with the UE based on the NG interface.

The flow for selecting the appropriate L-LMF entity of the non-serving node for the UE through the AMF entity/MME is as followings.

1) The AMF entity/MME selects the L-LMF entity of the non-serving node for the UE according to the localization requirement information of the UE.

Specifically, the localization requirement information of the UE includes any one or more of the followings: information of a serving node of the UE, a localization QoS requirement, and relevant information of the L-LMF entity.

2) The AMF entity/MME sends the localization request message to the L-LMF entity of the non-serving node, and starts to execute the process of directing from the UE to the L-LMF entity of the non-serving node.

The above localization request message carries the information of the serving cell of the UE, namely carries the information of the serving node of the UE.

3) The L-LMF entity of the non-serving node sends the downlink communication message carrying the relevant localization information to the AMF entity/MME, and the AMF entity/MME forwards the downlink communication message to the UE through the serving node of the UE.

In the above step 3), the communication message carrying the relevant localization information may be communicated by adopting the following modes.

The L-LMF entity of the non-serving node sends the LPP message to the AMF entity/MME, the AMF entity/MME sends the downlink communication message carrying the LPP information to the serving node, and the serving node sends the downlink RRC message carrying the LPP information to the UE.

4) The L-LMF entity of the non-serving node receives the uplink communication message forwarded by the UE through the serving node from the AMF entity/MME, wherein the communication message carries the relevant localization information.

In the above step 4), the communication message carrying the relevant localization information may be communicated by adopting the following modes.

The UE sends the uplink RRC message carrying the LPP information to the serving node, the serving node sends the uplink communication message carrying the LPP information to the AMF entity/MME, and the AMF entity/MME forwards the LPP message to the L-LMF entity of the non-serving node.

The executing sequence of above step 3) and step 4) may be interchanged without sequence limitation.

5) The AMF entity/MME starts to execute the process of redirecting from the UE to the L-LMF entity of the non-serving node when it is determined that the UE in the connected-state completes the node-across moving; and provides a localization service for the UE by forwarding the communication message, carrying the relevant localization information, mutually communicated between the UE and the non-serving node.

Specifically, in the process of the node-across moving of the UE in the connected-state, the AMF entity/MME determines the new serving node of the UE; receives the downlink communication message, carrying the relevant localization information, sent by the non-serving node and forwards the downlink communication message to the UE through the new serving node of the UE; and forwards the received uplink communication message sent by the UE through the new serving node to the non-serving node, wherein the uplink communication message carries the relevant localization information.

The process of redirecting from the UE to the L-LMF entity of the non-serving node is completed in the switching process of the serving nodes of the UE.

In this process, the AMF entity/MME will not select a new L-LMF entity of the non-serving node for the UE again. Optionally, in response to that a switching request message sent by the new serving node of the UE is received, the AMF entity/MME determines the new serving node of the UE and informs the non-serving node, so as to complete redirecting to the L-LMF entity.

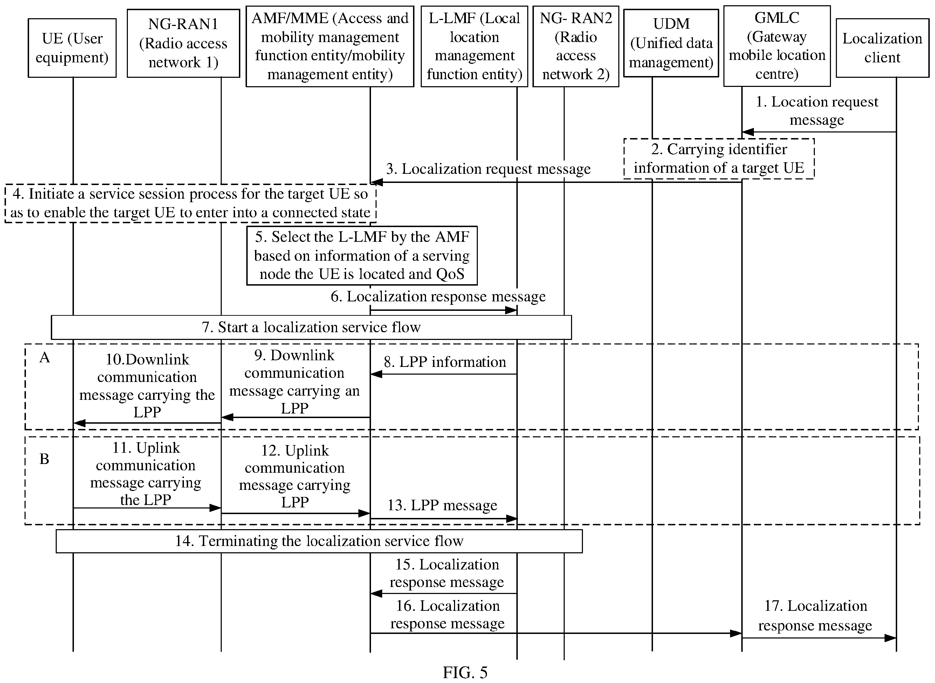

As shown in FIG. 5, the system further includes a localization client, a GMLC, UDM, and the UE. The specific implementation flow is as follows.
Step 1: the localization client initiates a location request message, and the location request message contains an identifier of a target UE, the localization QoS requirement and the like.
Step 2: optionally, the GMLC sends a message to the UDM, and the message carries the identifier information of the target UE. The GMLC receives a message from the UDM, and address information of the AMF entity/MME is returned in this message.
Step 3: the GMLC sends a localization request message to the AMF entity/MME according to the address information of the AMF entity/MME, and the localization request message contains the identifier of the target UE, the localization QoS requirement and the like.
Step 4: the AMF entity/MME initiates a service session process for the target UE, and thus the target UE enters into a connected state. This step is an optional step, and does not need to be executed if the UE has entered into the connected state.
Step 5: the AMF entity/MME selects to use the L-LMF entity of the non-serving node NG-RAN2 of the UE according to the information of the source node NG-RAN where the UE is located, the localization QoS requirement and pre-preserved relevant information of the L-LMF or the relevant localization information (such as localization capability information) obtained by querying through a network repository function (NRF).
Step 6: the AMF entity/MME sends the localization request message to the L-LMF of the serving node of the UE through an NLs/SLs interface, and the request message contains information such as a localization session identifier, the identifier of the target UE, and the localization QoS requirement.
Step 7: the L-LMF starts to execute the process of directing from the UE to the L-LMF entity of the non-serving node NG-RAN2. The process of directing from the UE to the L-LMF entity of the non-serving node NG-RAN2, includes: information of the selected L-LMF entity of the non-serving node NG-RAN2 is informed to the UE, and the UE sends the localization request message to the selected L-LMF entity of the non-serving node NG-RAN2 to request to be provided with the localization service.
Step 8: the L-LMF of the non-serving node NG-RAN2 of the UE sends the LPP information to the AMF entity/MME. The above LPP information is configured to inform the relevant information of the L-LMF entity of the non-serving node to the AMF entity/MME to realize the localization service for the UE.
Step 9: the AMF entity/MME sends a downlink non-access stratum (NAS) communication message carrying the LPP information to the serving node NG-RAN 1 of the UE.
Step 10: the NG-RAN1 node sends the RRC message carrying the LPP information of the NAS.
Step 11: the UE sends the RRC message carries the LPP information of the NAS to the NG-RAN1t.
Step 12: the NG-RAN1 sends an uplink NAS communication message carrying the LPP information to the AMF entity/MME.
Step 13: the AMF entity/MME forwards the LPP message to the L-LMF of the non-serving node NG-RAN2 of the UE.
   in FIG. 5, a block A represents transfer of the downlink LPP message, a block B represents transfer of the uplink LPP message, and the sequence of the block A and the block B may be interchanged.
Step 14: a localization service flow is terminated, and a flow from steps 15 to 17 is executed.
Step 15: the non-serving node NG-RAN2 sends a localization response to the AMF entity/MME, and informs the AMF entity/MME of terminating the localization service flow.
Step 16: the AMF entity/MME returns a localization response message to the GMLC and informs the GMLC of terminating the localization service flow.
Step 17: the GMLC sends a location service response message to the localization client and informs the localization client of terminating the localization service flow.

When it is determined that the UE in the connected-state completes the node-across moving, in the process of switching from the source serving node NG-RAN1 to a new serving node NG-RAN3, the AMF entity/MME may determine the information of the new serving node NG-RAN3 where the UE is located, receive the downlink communication message, carrying the relevant localization information,, sent by the non-serving node NG-RAN2, and forward the downlink communication message to the UE through the new serving node NG-RAN3 of the UE; and receives the uplink communication message sent by the UE through the NG-RAN3, and forwards the uplink communication message to the NG-RAN2 to provide the localization service for the UE, wherein the uplink communication message carries the relevant localization information.

### Embodiment 2

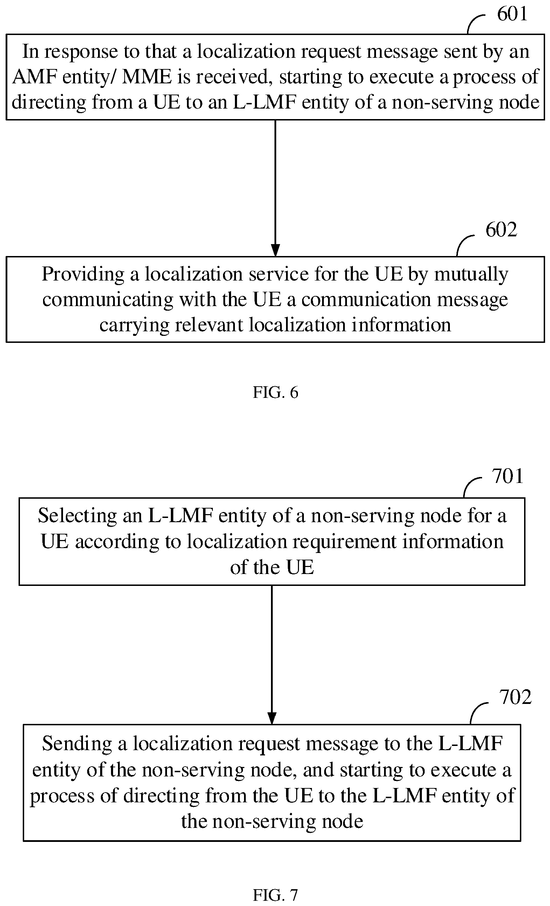

As shown in FIG. 6, based on the same inventive concept, an embodiment of the present disclosure provides a method for selecting an L-LMF entity, which is applied to the L-LMF entity of a non-serving node of a UE. The method includes:
step 601: in response to that a localization request message sent by an AMF entity/MME is received, a process of directing from the UE to the L-LMF entity of the non-serving node starts to be executed; and
step 602: a localization service is provided for the UE by mutually communicating a communication message with the UE, wherein the communication message carries relevant localization information.

As a possible implementation mode, the communication message is mutually communicated with the UE directly through a serving node of the UE.

As a possible implementation mode, the communication message is communicated by including:
a downlink communication message carrying the relevant localization information is sent to the AMF entity/MME, and is forwarded to the UE by the AMF entity/MME through the serving node of the UE; and
an uplink communication message forwarded by the UE through the serving node is received from the AMF entity/MME, wherein the uplink communication message carries the relevant localization information.

As a possible implementation mode, the method further includes:
a process of redirecting from the UE to the L-LMF entity of the non-serving node starts to be executed in a condition that it is determined that the UE in a connected-state completes node-across moving; and
a localization service is provided for the UE by mutually communicating the communication message carrying the relevant localization information with the UE.

As a possible implementation mode, the process of redirecting from the UE to the L-LMF entity of the non-serving node starts to be executed by:
in response to that a message, carrying information of the new serving node of the UE, sent by the AMF entity/MME is received in a process of the node-across moving of the UE in the connected-state, and a new serving node of the UE is determined.

As a possible implementation mode, the communication message carrying the relevant localization information is mutually communicated with the UE by:
the communication message carrying the relevant localization information is mutually communicated with the UE directly through the new serving node of the UE.

As a possible implementation mode, the communication message carrying the relevant localization information is mutually communicated with the UE by:
the downlink communication message carrying the relevant localization information is sent to the AMF entity/MME, and is forwarded to the UE by the AMF entity/MME through the new serving node of the UE; and
the uplink communication message, carrying the relevant localization information, forwarded by the UE through the new serving node is received from the AMF entity/MME.

As a possible implementation mode, the communication message carrying the relevant localization information includes a communication message carrying an LPP.

As shown in FIG. 7, the present disclosure further provides a method for selecting an L-LMF entity, which is applied to an AMF entity/MME. The method includes:
step 701: the L-LMF entity of a non-serving node is selected for a UE according to localization requirement information of the UE; and
step 702: a localization request message is sent to the L-LMF entity of the non-serving node, and a process of directing from the UE to the L-LMF entity of the non-serving node starts to be executed.

As a possible implementation mode, the method further includes:
a communication message mutually communicated between the UE and the non-serving node is forwarded, wherein the communication message carries relevant localization information.

As a possible implementation mode, the communication message mutually communicated between the UE and the non-serving node is forwarded by:
a downlink communication message, carrying the relevant localization information, sent by the non-serving node is received and forwarded to the UE through a serving node of the UE; and
an uplink communication message, carrying the relevant localization information, sent by the UE through the serving node is received and forwarded to the non-serving node.

As a possible implementation mode, the method further includes:
a process of redirecting from the UE to the L-LMF entity of the non-serving node starts to be executed in the condition that it is determined that the UE in a connected-state completes node-across moving; and
the communication message, carrying the relevant localization information, mutually communicated between the UE and the non-serving node is forwarded.

As a possible implementation mode, the communication message, carrying the relevant localization information, mutually communicated between the UE and the non-serving node is forwarded by:
a new serving node of the UE is determined and informed to the non-serving node in a process of the node-across moving of the UE in the connected-state.

As a possible implementation mode, the communication message, carrying the relevant localization information, mutually communicated between the UE and the non-serving node is forwarded by:
the downlink communication message, carrying the relevant localization information, sent by the non-serving node is received and forwarded to the UE through the new serving node of the UE; and
the uplink communication message, carrying the relevant localization information, sent by the UE through the new serving node is received and forwarded to the non-serving node.

As a possible implementation mode, the communication message carrying the relevant localization information includes a communication message carrying an LPP.

As a possible implementation mode, the localization requirement information of the UE includes any one or more of the followings: information of a serving node of the UE, a localization QoS requirement, and relevant information of the L-LMF entity.

### Embodiment 3

Based on the same inventive concept, an embodiment of the present disclosure provides a device for selecting an L-LMF entity. The device is a device where the L-LMF entity of a non-serving node of a UE is located. Because the device is the device in the method of the embodiments of the present disclosure, the principle for solving the problem of the device is similar to that of the method, implementation of the device may refer to that of the method, which will be not repeated.

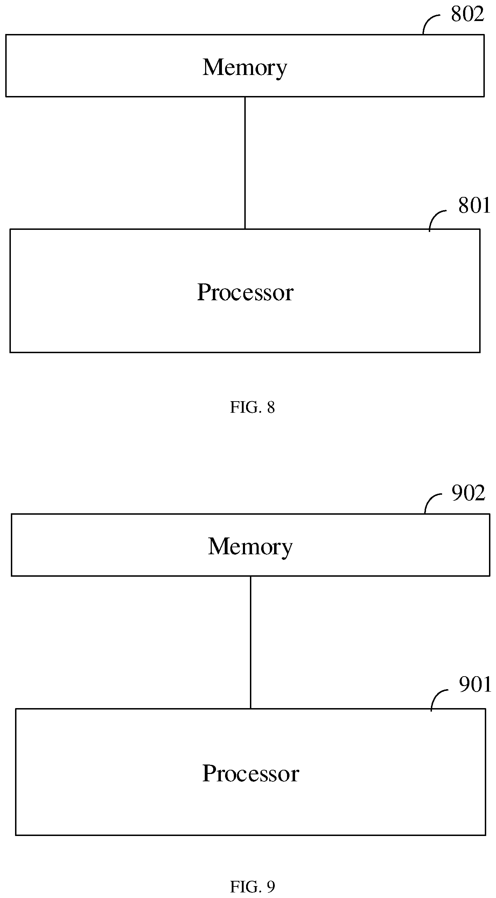

As shown in FIG. 8, the device includes a processor 801 and a memory 802, wherein the memory stores program codes. The program codes, when executed by the processor, cause the processor to be configured to:
in response to that a localization request message sent by an access and mobility management function (AMF) entity/ mobility management entity (MME) is received, start to execute a process of directing from the UE to the L-LMF entity of the non-serving node; and
provide a localization service for the UE by mutually communicating a communication message with the UE, wherein the communication message carries relevant localization information.

In a possible implementation mode, the processor is further configured to mutually communicate with the UE the communication message carrying the relevant localization information directly through a serving node of the UE.

In a possible implementation mode, the processor is further configured to:
send a downlink communication message carrying the relevant localization information to the AMF entity/MME, so that the AMF entity/MME forwards forward the downlink communication message to the UE through the serving node of the UE; and
receive an uplink communication message, carrying the relevant localization information, forwarded by the UE through the serving node from the AMF entity/MME.

In a possible implementation mode, the processor is further configured to:
start to execute a process of redirecting from the UE to the L-LMF entity of the non-serving node in the condition that it is determined that the UE in a connected-state completes node-across moving; and
provide a localization service for the UE by mutually communicating with the UE the communication message carrying the relevant localization information.

In a possible implementation mode, the processor is further configured to:
in response to that a message carrying information of the new serving node of the UE and sent by the AMF entity/MME in a process of the node-across moving of the UE in the connected-state is received, determine a new serving node of the UE.

In a possible implementation mode, the processor is further configured to mutually communicate with the UE the communication message carrying the relevant localization information directly through the new serving node of the UE.

In a possible implementation mode, the processor is further configured to:
send a downlink communication message carrying the relevant localization information to the AMF entity/MME, so that the AMF entity/MME forwards the downlink communication message to the UE through the new serving node of the UE; and
receive an uplink communication message, carrying the relevant localization information, forwarded by the UE through the new serving node from the AMF entity/MME.

In a possible implementation mode, the communication message carrying the relevant localization information includes a communication message carrying an LPP.

The present disclosure provides another device for selecting an L-LMF entity. The device is a device where an AMF entity/MME is located.

As shown in FIG. 9, the device includes a processor 901 and a memory 902, wherein the memory stores program codes. The program codes, when executed by the processor, cause the processor to be configured to:
select an L-LMF entity of a non-serving node for a UE according to localization requirement information of the UE; and
send a localization request message to the L-LMF entity of the non-serving node, and starting to execute a process of directing from the UE to the L-LMF entity of the non-serving node.

In a possible implementation mode, the processor is further configured to forward the communication message, carrying the relevant localization information, mutually communicated between the UE and the non-serving node.

In a possible implementation mode, the processor is further configured to:
receive a downlink communication message, carrying the relevant localization information, sent by the non-serving node, and forward the downlink communication message to the UE through a serving node of the UE; and
receive an uplink communication message, carrying the relevant localization information, sent by the UE through the serving node, and forward the uplink communication message to the non-serving node.

In a possible implementation mode, the processor is further configured to:
start to execute a process of redirecting from the UE to the L-LMF entity of the non-serving node in the condition that it is determined that the UE in the connected-state completes node-across moving; and
forward the communication message mutually communicated between the UE and the non-serving node.

In a possible implementation mode, the processor is further configured to determine a new serving node of the UE and inform the new serving node of the UE to the non-serving node in a process of the node-across moving of the UE in the connected-state.

In a possible implementation mode, the processor is further configured to:
receive the downlink communication message, carrying the relevant localization information, sent by the non-serving node, and forward the downlink communication message to the UE through the new serving node of the UE; and
receive the uplink communication message, carrying the relevant localization information, sent by the UE through the new serving node, and forward the uplink communication message to the non-serving node.

In a possible implementation mode, the communication message carrying the relevant localization information includes a communication message carrying an LPP.

In a possible implementation mode, the localization requirement information of the UE includes any one or more of the followings: information of a serving node of the UE, a localization QoS requirement, and relevant information of the L-LMF entity.

### Embodiment 4

Based on the same inventive concept, an embodiment of the present disclosure provides a first device for selecting an L-LMF entity. The first device is a device where the L-LMF entity of a non-serving node of a UE is located. Because the device is the device in the method of the embodiments of the present disclosure, the principle for solving the problem of the device is similar to that of the method, implementation of the device may refer to that of the method, which will be not repeated.

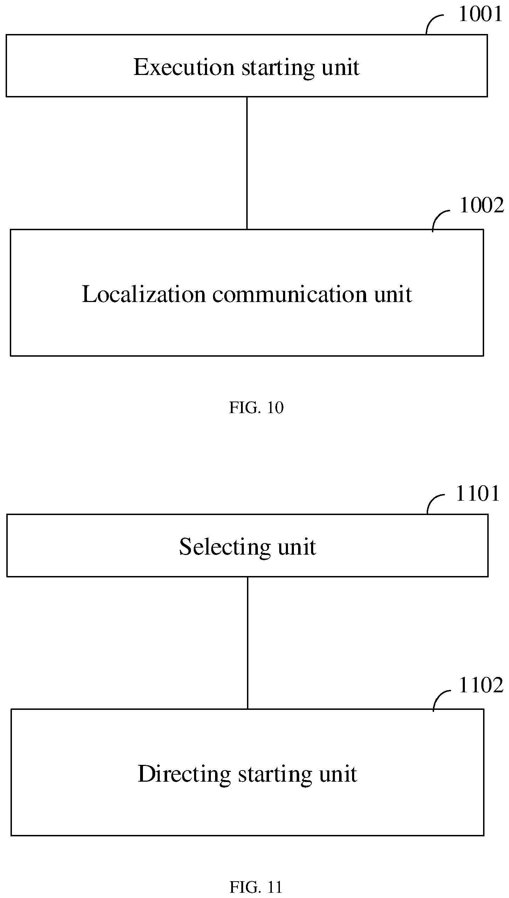

As shown in FIG. 10, the first device includes an execution starting unit 1001 and a localization communication unit 1002, wherein:
the execution starting unit is configured to start to execute a process of directing from the UE to the L-LMF entity of the non-serving node in response to that a localization request message sent by an AMF entity/MME is received; and
the localization communication unit is configured to provide a localization service for the UE by mutually communicating with the UE a communication message carrying relevant localization information.

As an optional implementation mode, the localization communication unit is further configured to mutually communicate with the UE the communication message carrying the relevant localization information directly through a serving node of the UE.

As an optional implementation mode, the localization communication unit is further configured to:
send a downlink communication message carrying the relevant localization information to the AMF entity/MME, so that the AMF entity/MME forwards the downlink communication message to the UE through the serving node of the UE; and
receive an uplink communication message, carrying the relevant localization information, forwarded by the UE through the serving node from the AMF entity/MME.

As an optional implementation mode, the first device further includes a redirecting unit, configured to:
start to execute a process of redirecting from the UE to the L-LMF entity of the non-serving node in the condition that it is determined that the UE in the connected-state completes node-across moving; and
provide the localization service for the UE by mutually communicating with the UE the communication message carrying the relevant localization information.

As an optional implementation mode, the redirecting unit is further configured to in response to that a message, carrying information of the new serving node of the UE, sent by the AMF entity/MME in a process of the node-across moving of the UE in the connected-state is received, determine a new serving node of the UE.

As an optional implementation mode, the redirecting unit is further configured to mutually communicate with the UE the communication message carrying the relevant localization information directly through the new serving node of the UE.

As an optional implementation mode, the localization communication unit is further configured to:
send a downlink communication message carrying the relevant localization information to the AMF entity/MME, and so that the AMF entity/MME forwards the downlink communication message to the UE through the new serving node of the UE; and
receive an uplink communication message, carrying the relevant localization information, forwarded by the UE through the new serving node from the AMF entity/MME.

As an optional implementation mode, the communication message carrying the relevant localization information includes a communication message carrying an LPP.

The present disclosure provides a second device for selecting an L-LMF entity. The second device is a device where an AMF entity/MME is located.

As shown in FIG. 11, the second device includes a selecting unit 1101 and a directing starting unit 1102, wherein:
the selecting unit 1101 is configured to select the L-LMF entity of a non-serving node for a UE according to localization requirement information of the UE; and
the directing starting unit 1102 is configured to send a localization request message to the L-LMF entity of the non-serving node, and start to execute a process of directing from the UE to the L-LMF entity of the non-serving node.

As an optional implementation mode, the second device further includes a forwarding unit, configured to forward a communication message, carrying relevant localization information, mutually communicated between the UE and the non-serving node.

As an optional implementation mode, the forwarding unit is further configured to:
receive a downlink communication message, carrying the relevant localization information, sent by the non-serving node, and forward the downlink communication message to the UE through a serving node of the UE; and
receive an uplink communication message, carrying the relevant localization information, sent by the UE through the serving node, and forward the uplink communication message to the non-serving node.

As an optional implementation mode, the second device further includes a redirecting unit, configured to:
start to execute a process of redirecting from the UE to the L-LMF entity of the non-serving node in the condition that it is determined that the UE in the connected-state completes node-across moving; and
forward the communication message, carrying the relevant localization information, mutually communicated between the UE and the non-serving node.

As an optional implementation mode, the forwarding unit is further configured to determine a new serving node of the UE and inform the new serving node of the UE to the non-serving node in a process of the node-across moving of the UE in the connected-state.

As an optional implementation mode, the forwarding unit is further configured to:
receive the downlink communication message, carrying the relevant localization information, sent by the non-serving node, and forward the downlink communication message to the UE through the new serving node of the UE; and
receive the uplink communication message, carrying the relevant localization information, sent by the UE through the new serving node, and forward the uplink communication message to the non-serving node.

As an optional implementation mode, the communication message carrying the relevant localization information includes a communication message carrying an LPP.

As an optional implementation mode, the localization requirement information of the UE includes any one or more of the followings: information of a serving node of the UE, a localization QoS requirement, and relevant information of the L-LMF entity.

### Embodiment 5

An embodiment of the present disclosure further provides a computer readable volatile storage medium, including program codes. The program codes, when run on a computing terminal, is configured to cause the computing terminal to:
start to execute a process of directing from the UE to the L-LMF entity of the non-serving node in response to that a localization request message sent by an AMF entity/MME is received, and
provide a localization service for the UE by mutually communicating with the UE a communication message carrying relevant localization information.

An embodiment of the present disclosure further provides another computer readable volatile storage medium, including program codes. The program codes, when run on a computing terminal, is configured to cause the computing terminal to:
select an L-LMF entity of a non-serving node for a UE according to localization requirement information of the UE; and
send a localization request message to the L-LMF entity of the non-serving node, and a process of directing from the UE to the L-LMF entity of the non-serving node starts to be executed.

The skilled in the art should understand that the embodiments of the present disclosure may be provided as methods, systems or computer program products. Therefore, the present application may adopt a form of full hardware embodiments, full software embodiments, or an embodiment combining software and hardware aspects. Moreover, the present disclosure may adopt a form of the computer program products implemented on one or more computer available storage mediums (including but not limited to a disk memory, an optical memory and the like) containing a computer available program code.

The present application is described with reference to flow charts and/or block diagrams of the methods, the devices (systems), and the computer program products according to the embodiments of the present disclosure. It should be understood that each flow and/or block in the flow charts and/or the block diagrams and combinations of the flows and/or the blocks in the flow charts and/or the block diagrams may be implemented by computer program instructions. The computer program instructions may be provided to a processor of a general-purpose computer, a special-purpose computer, an embedded processing machine or a further programmable data processing device, thereby generating a machine, such that the instructions, when executed by the processor of the computer or the further programmable data processing device, generate a device for implementing functions specified in one or more flows in the flow charts and/or one or more blocks in the block diagrams.

The computer program instructions may also be stored in a computer readable memory which can guide the computer or the further programmable data processing device to work in a specific mode, thus the instructions stored in the computer readable memory generates an article of manufacture that includes a commander device that implement the functions specified in one or more flows in the flow charts and/or one or more blocks in the block diagrams.

The computer program instructions may also be loaded to the computer or the further programmable data processing device, so that a series of operating steps may be executed on the computer or the further programmable device to generate computer-implemented processing, such that the instructions executed on the computer or the further programmable device provide steps for implementing the functions specified in one or more flows in the flow charts and/or one or more blocks in the block diagrams. Obviously, those skilled in the art can make various modifications and variations to the present application without departing from the spirit and scope of the present disclosure. In this way, if these modifications and variations of the present application fall within the scope of the claims of the present application and their equivalent art, the present disclosure also intends to include these modifications and variations.

## Claims

1. A method for selecting a local location management function (L-LMF) entity, applied to an L-LMF entity of a non-serving node of a user equipment (UE), wherein the method comprises:
in response to that a localization request message sent by an access and mobility management function (AMF) entity/ mobility management entity (MME) is received, starting to execute a process of directing from the UE to the L-LMF entity of the non-serving node; and
providing a localization service for the UE by mutually communicating a communication message with the UE, wherein the communication message carries relevant localization information.

2. The method according to claim 1, wherein the mutually communicating the communication message with the UE comprises:
mutually communicating the communication message with the UE directly through a serving node of the UE.

3. The method according to claim 1, wherein the mutually communicating the communication message with the UE comprises:
sending a downlink communication message to the AMF entity/MME, so that the AMF entity/MME forwards the downlink communication message to the UE through a serving node of the UE, wherein the downlink communication message carries the relevant localization information; and
receiving an uplink communication message forwarded by the UE through the serving node from the AMF entity/MME, wherein the uplink communication message carries the relevant localization information.

4. The method according to any one of claims 1-3, further comprising:
starting to execute a process of redirecting from the UE to the L-LMF entity of the non-serving node in a condition that it is determined that the UE in a connected-state completes node-across moving; and
providing a localization service for the UE by mutually communicating the communication message with the UE.

5. The method according to claim 4, wherein the starting to execute the process of redirecting from the UE to the L-LMF entity of the non-serving node, comprises:
in response to that a message sent by the AMF entity/MME in a process of the node-across moving of the UE in the connected-state is received, determining a new serving node of the UE, wherein the message carries information of the new serving node of the UE.

6. The method according to claim 4, wherein the mutually communicating the communication message with the UE comprises:
mutually communicating the communication message with the UE directly through a new serving node of the UE.

7. The method according to claim 4, wherein the mutually communicating the communication message with the UE comprises:
sending a downlink communication message to the AMF entity/MME, so that the AMF entity/MME forwards the downlink communication message to the UE through a new serving node of the UE, wherein the downlink communication message carries the relevant localization information; and
receiving an uplink communication message forwarded by the UE through the new serving node from the AMF entity/MME, wherein the uplink communication message carries the relevant localization information.

8. The method according to claim 1, wherein the communication message comprises a communication message carrying an LPP.

9. A method for selecting a local location management function (L-LMF) entity, applied to an access and mobility management function (AMF) entity/ mobility management entity (MME), wherein the method comprises:
selecting an L-LMF entity of a non-serving node for a user equipment (UE) according to localization requirement information of the UE; and
sending a localization request message to the L-LMF entity of the non-serving node, and starting to execute a process of directing from the UE to the L-LMF entity of the non-serving node.

10. The method according to claim 9, further comprising:
forwarding a communication message mutually communicated between the UE and the non-serving node, wherein the communication message carries relevant localization information.

11. The method according to claim 10, wherein the forwarding the communication message mutually communicated between the UE and the non-serving node, comprises:
receiving a downlink communication message sent by the non-serving node, and forwarding the downlink communication message to the UE through a serving node of the UE, wherein the downlink communication message carries the relevant localization information; and
receiving an uplink communication message and sent by the UE through the serving node, and forwarding the uplink communication message to the non-serving node, wherein the uplink communication message carries the relevant localization information.

12. The method according to any one of claims 9-11, further comprising:
starting to execute a process of redirecting from the UE to the L-LMF entity of the non-serving node in a condition that it is determined that the UE in a connected-state completes node-across moving; and
forwarding the communication message mutually communicated between the UE and the non-serving node.

13. The method according to claim 12, wherein the forwarding the communication message mutually communicated between the UE and the non-serving node, comprises:
determining a new serving node of the UE and informing the new serving node of the UE to the non-serving node in a process of the node-across moving of the UE in connected-state.

14. The method according to claim 12, wherein the forwarding the communication message mutually communicated between the UE and the non-serving node, comprises:
receiving a downlink communication message sent by the non-serving node and forwarding the downlink communication message to the UE through a new serving node of the UE, wherein the downlink communication message carries the relevant localization information; and
receiving a uplink communication message sent by the UE through the new serving node and forwarding the uplink communication message to the non-serving node, wherein the uplink communication message carries the relevant localization information.

15. The method according to claim 9, wherein the communication message comprises a communication message carrying an LPP.

16. The method according to claim 9, wherein the localization requirement information of the UE comprises any one or more of the followings:
information of a serving node of the UE, a localization quality of service (QoS) requirement, and relevant information of the L-LMF entity.

17. A device for selecting a local location management function (L-LMF) entity, wherein the device is a device where the L-LMF entity of a non-serving node of a user equipment (UE) is located and comprises:
a processor; and
a memory storing program codes wherein the program codes, when executed by the processor, cause the processor to be configured to:
in response to that a localization request message sent by an access and mobility management function (AMF) entity/ mobility management entity (MME) is received, start to execute a process of directing from the UE to the L-LMF entity of the non-serving node; and
provide a localization service for the UE by mutually communicating a communication message with the UE, wherein the communication message carries relevant localization information.

18. The device according to claim 17, wherein the processor is further configured to:
mutually communicate the communication message with the UE directly through a serving node of the UE.

19. The device according to claim 17, wherein the processor is further configured to:
send a downlink communication message to the AMF entity/MME, so that the AMF entity/MME forwards the downlink communication message to the UE through a serving node of the UE, wherein the downlink communication message carries the relevant localization information; and
receive an uplink communication message forwarded by the UE through the serving node from the AMF entity/MME, wherein the uplink communication message carries the relevant localization information.

20. The device according to any one of claims 17-19, wherein the processor is further configured to:
start to execute a process of redirecting from the UE to the L-LMF entity of the non-serving node in a condition that it is determined that the UE in a connected-state completes node-across moving; and
provide a localization service for the UE by mutually communicating with the UE the communication message.

21. The device according to claim 20, wherein the processor is further configured to:
in response to that a message sent by the AMF entity/MME in a process of the node-across moving of the UE in the connected-state is received, determine a new serving node of the UE, wherein the message carries information of the new serving node of the UE.

22. The device according to claim 20, wherein the processor is further configured to:
mutually communicate with the UE the communication message directly through a new serving node of the UE.

23. The device according to claim 20, wherein the processor is further configured to:
send a downlink communication message to the AMF entity/MME, so that the AMF entity/MME forwards the downlink communication message to the UE through a new serving node of the UE, wherein the downlink communication message carries the relevant localization information; and
receive an uplink communication message forwarded by the UE through the new serving node from the AMF entity/MME, wherein the uplink communication message carries the relevant localization information.

24. The device according to claim 17, wherein the communication message carrying the relevant localization information comprises a communication message carrying an LPP.

25. A device for selecting a local location management function (L-LMF) entity, wherein the device is a device where an access and mobility management function (AMF) entity/ mobility management entity (MME) is located and comprises:
a processor; and
a memory storing program codes, wherein the program codes, when executed by the processor, cause the processor to be configured to:
select an L-LMF entity of a non-serving node for a user equipment (UE) according to localization requirement information of the UE; and
send a localization request message to the L-LMF entity of the non-serving node, and starting to execute a process of directing from the UE to the L-LMF entity of the non-serving node.

26. The device according to claim 25, wherein the processor is further configured to:
forward a communication message mutually communicated between the UE and the non-serving node, wherein the communication message carries relevant localization information.

27. The device according to claim 26, wherein the processor is further configured to:
receive a downlink communication message sent by the non-serving node, and forward the downlink communication message to the UE through a serving node of the UE, wherein the downlink communication message carries the relevant localization information; and
receive an uplink communication message sent by the UE through the serving node, and forward the uplink communication message to the non-serving node, wherein the uplink communication message carries the relevant localization information.

28. The device according to any one of claims 25-27, wherein the processor is further configured to:
start to execute a process of redirecting from the UE to the L-LMF entity of the non-serving node in a condition that it is determined that the UE in a connected-state completes node-across moving; and
forward the communication message mutually communicated between the UE and the non-serving node.

29. The device according to claim 28, wherein the processor is further configured to:
determine a new serving node of the UE and inform the new serving node of the UE to the non-serving node in a process of the node-across moving of the UE in the connected-state.

30. The device according to claim 28, wherein the processor is further configured to:
receive a downlink communication message sent by the non-serving node and forward the downlink communication message to the UE through a new serving node of the UE, wherein the downlink communication message carries the relevant localization information; and
receive a uplink communication message sent by the UE through the new serving node and forward the uplink communication message to the non-serving node, wherein the uplink communication message carries the relevant localization information.

31. The device according to claim 25, wherein the communication message comprises a communication message carrying an LPP.

32. The device according to claim 25, wherein the localization requirement information of the UE comprises any one or more of the followings:
information of a serving node of the UE, a localization quality of service (QoS) requirement, and relevant information of the L-LMF entity.
